# EUROPÄISCHE PATENTANMELDUNG

(11) **EP 4 749 434 A1**
(43) Veröffentlichungstag der Anmeldung: **27.05.2026**
(21) Anmeldenummer: 24214837.7
(22) Anmeldetag: 22.11.2024
(51) Int. Cl.: G06F 8/35, G06F 8/10

(54) **VERFAHREN UND VORRICHTUNG FÜR EINE VERWALTUNG VON DATEN FÜR EINE ENTWICKLUNG EINES TECHNISCHEN ERZEUGNISSES**

(71) Anmelder: Robert Bosch GmbH, 70442 Stuttgart (DE)
(72) Erfinder: Bauknecht, Uwe, 70599 Stuttgart (DE); Junginger, Andrej, 70197 Stuttgart (DE); Strauss, Thilo, Wuxi City, Jiangsu Province, China (CN); Schlichting, Marco, 73525 Schwaebisch Gmuend (DE)

(57) **Zusammenfassung**

Verfahren, beispielsweise computerimplementiertes Verfahren, für eine Verwaltung von Daten für eine Entwicklung eines technischen Erzeugnisses, beispielsweise eines Fahrzeugs oder einer Komponente, beispielsweise ein Steuergerät oder Fahrzeugcomputer, für das Fahrzeug, aufweisend: Bereitstellen eines Gesamtmodells, das Aspekte mehrerer auf jeweils unterschiedliche Aspekte des technischen Erzeugnisses bezogener, beispielsweise spezialisierter, Teilmodelle vereint, und, optional, Verwenden des Gesamtmodells für die Entwicklung des technischen Erzeugnisses.

## Beschreibung

### Stand der Technik

Die Offenbarung betrifft ein Verfahren für eine Verwaltung von Daten für eine Entwicklung eines technischen Erzeugnisses.

Die Offenbarung betrifft ferner eine Vorrichtung für eine Verwaltung von Daten für eine Entwicklung eines technischen Erzeugnisses.

### Offenbarung der Erfindung

Manche Beispiele beziehen sich auf ein Verfahren, beispielsweise ein computerimplementiertes Verfahren, für eine Verwaltung von Daten für eine Entwicklung eines technischen Erzeugnisses, beispielsweise eines Fahrzeugs oder einer Komponente, beispielsweise ein Steuergerät oder Fahrzeugcomputer, für das Fahrzeug, aufweisend: Bereitstellen eines Gesamtmodells, das Aspekte mehrerer auf jeweils unterschiedliche Aspekte des technischen Erzeugnisses bezogener, beispielsweise spezialisierter, Teilmodelle vereint, und, optional, Verwenden des Gesamtmodells für die Entwicklung des technischen Erzeugnisses. Dies ermöglicht bei weitern Beispielen eine effiziente Verarbeitung von Informationen der unterschiedlichen Teilmodelle, beispielsweise direkt mittels des Gesamtmodells.

Bei manchen Beispielen kann das technische Erzeugnis, z.B. alternativ oder ergänzend zu dem vorstehend als Beispiel genannten Fahrzeug, wenigstens einen der folgenden Aspekte aufweisen: a) einen Verbund von mehreren Erzeugnissen, beispielsweise Steuergeräten, beispielsweise für ein Fahrzeug, oder b) einen Verbund von mehreren Fahrzeugen bzw. deren Komponenten wie z.B. Steuergeräten, oder c) einen Verbund von wenigstens einem Fahrzeug bzw. wenigstens einer Komponente des Fahrzeugs und wenigstens einer weiteren Einrichtung, beispielsweise einer Cloud bzw. einem Cloud-System.

Bei manchen Beispielen werden wenigstens manche, beispielsweise alle, Informationen des Gesamtmodells mittels wenigstens eines, beispielsweise strukturierten, Graphen, organisiert, beispielsweise dargestellt. Beispielsweise kann das Gesamtmodell eine oder mehrere Graphendatenbanken aufweisen, was eine besonders effiziente Verwaltung und/oder Abfrage von Informationen aus dem Gesamtmodell ermöglicht.

Bei manchen Beispielen weist das Verwenden des Gesamtmodells wenigstens einen der folgenden Aspekte auf: a) Steuern wenigstens eines Aspekts der Entwicklung, beispielsweise wenigstens eines Entwicklungsschritts, oder b) Analysieren wenigstens eines Aspekts der Entwicklung, beispielsweise wenigstens eines Entwicklungsschritts, oder c) Optimieren wenigstens eines Aspekts der Entwicklung, beispielsweise wenigstens eines Entwicklungsschritts.

Beispielsweise weist das Verfahren auf: Integrieren wenigstens eines weiteren Teilmodells, beispielsweise Integrieren von wenigstens einem Aspekt des wenigstens eines weiteren Teilmodells, in das Gesamtmodell, beispielsweise Zusammenführen von wenigstens einem Aspekt des wenigstens eines weiteren Teilmodells mit dem Gesamtmodell. Dadurch können, ggf. auch später, also z.B. nach dem Bereitstellen des Gesamtmodells, ein oder mehrere weitere Teilmodelle mit in das Gesamtmodell integriert werden.

Bei manchen Beispielen ist vorgesehen, dass das Verfahren aufweist: Bereitstellen einer, beispielsweise zentralen, beispielsweise generischen, Schnittstelle, beispielsweise Programmierschnittstelle, beispielsweise Programmierschnittstelle für Anwendungen, beispielsweise Application Programming Interface, beispielsweise automatisches, also z.B. ohne menschliche Interaktion, Erstellen der Schnittstelle basierend wenigstens auf dem Gesamtmodell, wobei beispielsweise das Bereitstellen der Schnittstelle ein Bereitstellen der Schnittstelle basierend auf wenigstens einer mit dem Gesamtmodell assoziierten, beispielsweise durch das Gesamtmodell charakterisierten, Ontologie.

Beispielsweise weist das Verfahren auf: Bereitstellen von Informationen, beispielsweise der Daten, für mehrere, beispielsweise alle, an der Entwicklung des technischen Erzeugnisses beteiligte Entitäten, beispielsweise Systeme oder Computer und/oder Personen, beispielsweise Teams, beispielsweise Bereitstellen der Daten mittels des Gesamtmodells.

Weiter beispielsweise kann das Verfahren wenigstens eines der folgenden Elemente aufweisen: a) Importieren eines Teilmodells in das Gesamtmodell, beispielsweise Importieren wenigstens einer Instanz des Teilmodells, oder b) Exportieren eines Teilmodells aus dem Gesamtmodell, beispielsweise Exportieren wenigstens einer Instanz des Teilmodells.

Bei manchen Beispielen ist vorgeschlagen, dass wenigstens eines der Teilmodelle für wenigstens einen der folgenden Aspekte bezüglich des technischen Erzeugnisses vorgesehen ist: a) Entwicklung, wobei ein mit der Entwicklung des technischen Erzeugnisses assoziiertes Teilmodell wenigstens einen der folgenden Aspekte berücksichtigt und/oder aufweist: a1) Anforderungen, oder a2) Aspekte eines funktionalen Designs, oder a3) Aspekte eines architektonischen Designs, oder a4) Validierung, oder a5) Überprüfung, oder a6) Datenerfassung, beispielsweise Felddatenerfassung, oder b) Lebenszyklus, wobei ein mit dem Lebenszyklus des technischen Erzeugnisses assoziiertes Teilmodell wenigstens einen der folgenden Aspekte berücksichtigt und/oder aufweist: b1) Konzept, oder b2) Entwicklung, oder b3) Serienreife, oder b4) Pflege, oder b5) Aktualisierungen, beispielsweise im Feld, oder c) Anwendungsbereiche, beispielsweise c1) Cloud, beispielsweise betreffend eine Serverarchitektur für die Cloud, und/oder betreffend eine Ausbringung, beispielsweise Deployment, und/oder eine Orchestrierung, oder c2) Edge, beispielsweise betreffend eine Edge-Architektur, und/oder betreffend eine Ausbringung, beispielsweise Deployment, und/oder eine Orchestrierung, oder d) Architektur, beispielsweise Systemarchitektur, beispielsweise betreffend Aspekte von d1) Netzwerktopologie, oder d2) Hardware, beispielsweise Sensoren und/oder Aktoren, oder d3) Software, beispielsweise betreffend Aspekte von Treibern, beispielsweise Hardwaretreibern und/oder Basissoftware und/oder Middleware und/oder Anwendungssoftware und/oder Dienste, oder e) Mechanik, oder f) Thermomanagement.

Manche Beispiele sehen vor, dass das Verfahren wenigstens eines der folgenden Elemente aufweist: Anwenden, beispielsweise automatisches (z.B. ohne menschliche Interaktion erfolgendes) Anwenden, wenigstens eines Algorithmus auf das Gesamtmodell, wobei der wenigstens eine Algorithmus wenigstens eines der folgenden Elemente aufweist: a) Generierung von Testfällen, oder b) Durchführung von Tests, beispielsweise basierend auf, beispielsweise automatisch, generierten Testfällen, oder c) Generierung von Dokumentation, beispielsweise für wenigstens einen Aspekt des Gesamtmodells und/oder des technischen Erzeugnisses, oder d) Validierung wenigstens eines mit dem technischen Erzeugnis assoziierten Aspekts.

Bei manchen Beispielen ist vorgesehen, dass das Verfahren aufweist: Verarbeiten einer Software für ein bzw. das technische Erzeugnis, beispielsweise für einen Fahrzeugcomputer für das Fahrzeug, wobei beispielsweise das Verarbeiten wenigstens eines der folgenden Elemente aufweist: a) Entwickeln der Software, oder b) Prüfen der Software, oder c) Diagnostizieren von Fehlern der Software, oder d) Dokumentieren der Software.

Weitere Beispiele beziehen sich auf eine Vorrichtung für eine Verwaltung von Daten für eine Entwicklung eines technischen Erzeugnisses, beispielsweise eines Fahrzeugs oder einer Komponente, beispielsweise ein Steuergerät oder Fahrzeugcomputer, für das Fahrzeug, wobei die Vorrichtung dazu ausgebildet ist, das Verfahren gemäß der Offenbarung auszuführen.

Weitere Beispiele beziehen sich auf ein computerlesbares Speichermedium, umfassend Befehle, die bei der Ausführung durch einen Computer diesen veranlassen, das Verfahren gemäß der Offenbarung auszuführen.

Weitere Beispiele beziehen sich auf ein Computerprogramm, umfassend Befehle, die bei der Ausführung des Programms durch einen Computer diesen veranlassen, das Verfahren gemäß der Offenbarung auszuführen.

Weitere Beispiele beziehen sich auf ein Datenträgersignal, das das Computerprogramm gemäß der Offenbarung überträgt und/oder charakterisiert.

Weitere Beispiele beziehen sich auf eine Verwendung des Verfahrens gemäß der Offenbarung und/oder der Vorrichtung gemäß der Offenbarung und/oder des computerlesbaren Speichermediums gemäß der Offenbarung und/oder des Computerprogramms gemäß der Offenbarung und/oder des Datenträgersignals gemäß der Offenbarung für wenigstens eines der folgenden Elemente: a) Verknüpfen von Informationen aus verschiedenen Quellen, beispielsweise Vernetzen der mehreren Teilmodelle, oder b) Ermöglichen eines Ermittelns von, beispielsweise vergleichsweise komplexen, Informationen basierend auf Aspekten der mehreren Teilmodelle, oder c) Ermöglichen eines, beispielsweise direkten, Informationsaustauschs zwischen den mehreren Teilmodellen, beispielsweise innerhalb des Gesamtmodells, beispielsweise innerhalb einer selben Graphenstruktur, oder d) globales Optimieren über die mehreren Teilmodelle, oder e) Vermeiden eines manuellen Zusammenführens von Informationen der mehreren Teilmodelle.

Weitere Merkmale, Anwendungsmöglichkeiten und Vorteile ergeben sich aus der nachfolgenden Beschreibung von Beispielen, die in den Figuren der Zeichnung dargestellt sind. Dabei bilden alle beschriebenen oder dargestellten Merkmale für sich oder in beliebiger Kombination den Gegenstand der Offenbarung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm,
- Fig. 2: schematisch ein vereinfachtes Blockdiagramm,
- Fig. 3: schematisch ein vereinfachtes Flussdiagramm,
- Fig. 4: schematisch ein vereinfachtes Flussdiagramm,
- Fig. 5: schematisch ein vereinfachtes Blockdiagramm,
- Fig. 6: schematisch ein vereinfachtes Flussdiagramm,
- Fig. 7: schematisch ein vereinfachtes Flussdiagramm,
- Fig. 8: schematisch ein vereinfachtes Diagramm,
- Fig. 9: schematisch ein vereinfachtes Blockdiagramm,

- Fig. 10: schematisch Beispiele von Verwendungen.

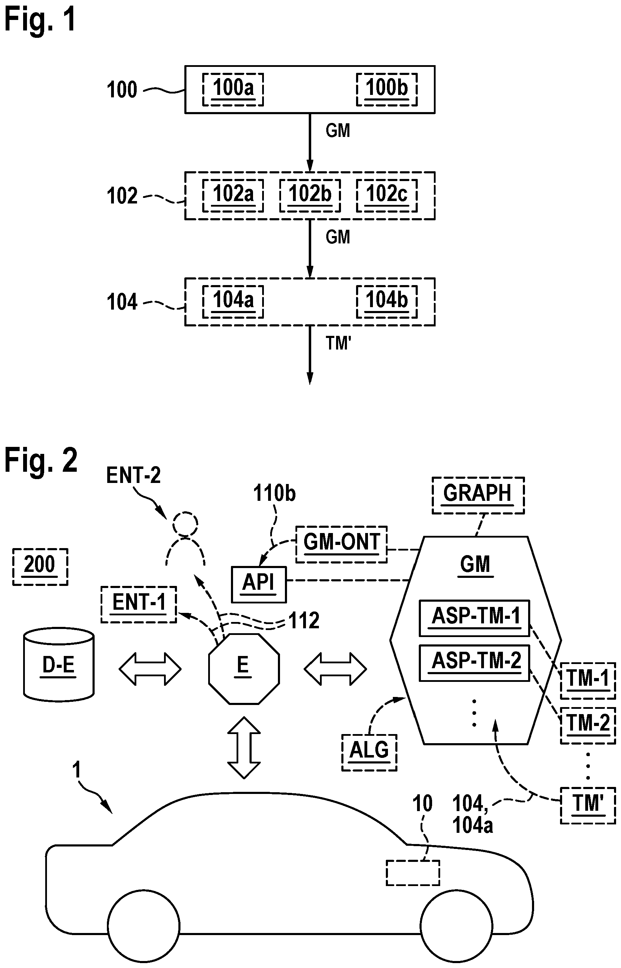

Manche Beispiele, s. z.B. Fig. 1, 2, beziehen sich auf ein Verfahren, beispielsweise ein computerimplementiertes Verfahren, für eine Verwaltung von Daten D-E für eine Entwicklung E eines technischen Erzeugnisses 1, 10, beispielsweise eines Fahrzeugs 1 oder einer Komponente 10, beispielsweise ein Steuergerät oder Fahrzeugcomputer, für das Fahrzeug 1, aufweisend: Bereitstellen 100 (Fig. 1) eines Gesamtmodells GM, das Aspekte mehrerer auf jeweils unterschiedliche Aspekte des technischen Erzeugnisses bezogener, beispielsweise spezialisierter, Teilmodelle TM-1, TM-2, ... vereint, und, optional, Verwenden 102 des Gesamtmodells GM für die Entwicklung des technischen Erzeugnisses 1, 10. Dies ermöglicht bei weiteren Beispielen eine effiziente Verarbeitung von Informationen der unterschiedlichen Teilmodelle, beispielsweise direkt mittels des Gesamtmodells GM.

Bei manchen Beispielen, Fig. 2, werden wenigstens manche, beispielsweise alle, Informationen des Gesamtmodells GM mittels wenigstens eines, beispielsweise strukturierten, Graphen GRAPH, organisiert 100a (Fig. 1), beispielsweise dargestellt 100b. Beispielsweise kann das Gesamtmodell GM eine oder mehrere Graphendatenbanken aufweisen, was eine besonders effiziente Verwaltung und/oder Abfrage von Informationen aus dem Gesamtmodell GM ermöglicht.

Bei manchen Beispielen, Fig. 1, weist das Verwenden 102 des Gesamtmodells GM wenigstens einen der folgenden Aspekte auf: a) Steuern 102a wenigstens eines Aspekts der Entwicklung E, beispielsweise wenigstens eines Entwicklungsschritts, oder b) Analysieren 102b wenigstens eines Aspekts der Entwicklung E, beispielsweise wenigstens eines Entwicklungsschritts, oder c) Optimieren 102c wenigstens eines Aspekts der Entwicklung E, beispielsweise wenigstens eines Entwicklungsschritts.

Beispielsweise, Fig. 1, weist das Verfahren auf: Integrieren 104 wenigstens eines weiteren Teilmodells TM', beispielsweise Integrieren 104a von wenigstens einem Aspekt des wenigstens eines weiteren Teilmodells TM', in das Gesamtmodell GM, beispielsweise Zusammenführen 104b von wenigstens einem Aspekt des wenigstens eines weiteren Teilmodells TM' mit dem Gesamtmodell GM. Dadurch können, ggf. auch später, also z.B. nach dem Bereitstellen 100 des Gesamtmodells GM, ein oder mehrere weitere Teilmodelle mit TM' in das Gesamtmodell GM integriert werden, beispielsweise um das Gesamtmodell GM zu erweitern, beispielsweise, um einer Weiterentwicklung und/oder einer sonstigen Erweiterung von mit der Entwicklung E assoziierten Informationen Rechnung zu tragen.

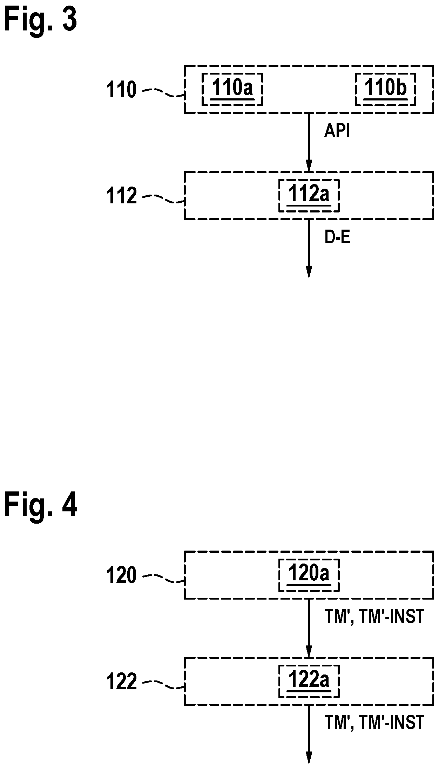

Bei manchen Beispielen, Fig. 3, ist vorgesehen, dass das Verfahren aufweist: Bereitstellen 110 einer, beispielsweise zentralen, beispielsweise generischen, Schnittstelle API, beispielsweise Programmierschnittstelle, beispielsweise Programmierschnittstelle für Anwendungen, beispielsweise Application Programming Interface, beispielsweise automatisches, also z.B. ohne menschliche Interaktion, Erstellen 110a der Schnittstelle API basierend wenigstens auf dem Gesamtmodell GM, wobei beispielsweise das Bereitstellen 110 der Schnittstelle API ein Bereitstellen 110b der Schnittstelle basierend auf wenigstens einer mit dem Gesamtmodell GM assoziierten, beispielsweise durch das Gesamtmodell GM charakterisierten, Ontologie aufweist.

Beispielsweise, Fig. 3, weist das Verfahren auf: Bereitstellen 112 von Informationen, beispielsweise der Daten D-E, für mehrere, beispielsweise alle, an der Entwicklung E des technischen Erzeugnisses 1, 10 beteiligte Entitäten ENT1, ENT-2 (Fig. 2), beispielsweise Systeme oder Computer ENT-1 und/oder Personen ENT-2, beispielsweise Teams, beispielsweise Bereitstellen 112a der Daten D-E mittels des Gesamtmodells GM.

Weiter beispielsweise, Fig. 4, kann das Verfahren wenigstens eines der folgenden Elemente aufweisen: a) Importieren 120 eines Teilmodells TM' (Fig. 2) in das Gesamtmodell GM, beispielsweise Importieren 120a wenigstens einer Instanz TM'-INST des Teilmodells TM', oder b) Exportieren 122 eines Teilmodells TM' aus dem Gesamtmodell GM, beispielsweise Exportieren 122a wenigstens einer Instanz TM'-INST des Teilmodells TM'.

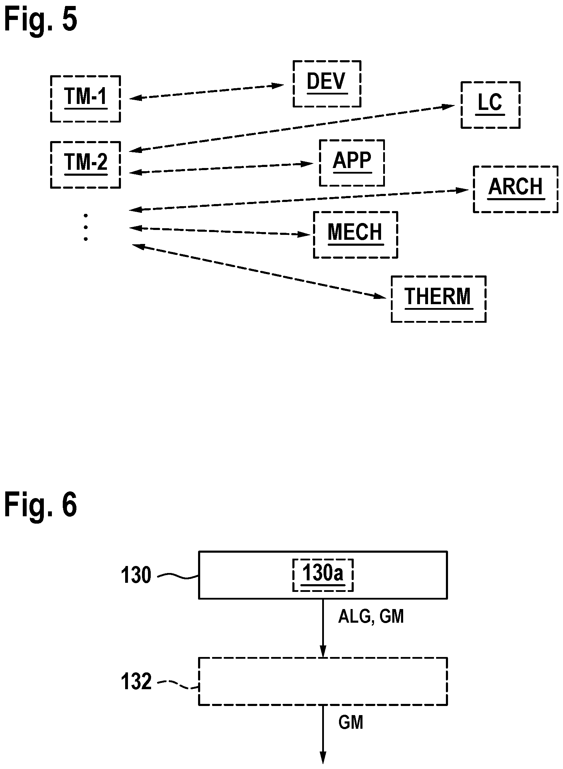

Bei manchen Beispielen, Fig. 2, 5, ist vorgeschlagen, dass wenigstens eines der Teilmodelle TM-1, TM-2, ..., TM' für wenigstens einen der folgenden Aspekte bezüglich des technischen Erzeugnisses 1, 10 vorgesehen ist: a) Entwicklung DEV, wobei ein mit der Entwicklung des technischen Erzeugnisses assoziiertes Teilmodell wenigstens einen der folgenden Aspekte berücksichtigt und/oder aufweist: a1) Anforderungen, oder a2) Aspekte eines funktionalen Designs, oder a3) Aspekte eines architektonischen Designs, oder a4) Validierung, oder a5) Überprüfung, oder a6) Datenerfassung, beispielsweise Felddatenerfassung, oder b) Lebenszyklus LC, wobei ein mit dem Lebenszyklus des technischen Erzeugnisses assoziiertes Teilmodell wenigstens einen der folgenden Aspekte berücksichtigt und/oder aufweist: b1) Konzept, oder b2) Entwicklung, oder b3) Serienreife, oder b4) Pflege, oder b5) Aktualisierungen, beispielsweise im Feld, oder c) Anwendungsbereiche APP, beispielsweise c1) Cloud, beispielsweise betreffend eine Serverarchitektur für die Cloud, und/oder betreffend eine Ausbringung, beispielsweise Deployment, und/oder eine Orchestrierung, oder c2) Edge, beispielsweise betreffend eine Edge-Architektur, und/oder betreffend eine Ausbringung, beispielsweise Deployment, und/oder eine Orchestrierung, oder d) Architektur ARCH, beispielsweise Systemarchitektur, beispielsweise betreffend Aspekte von d1) Netzwerktopologie, oder d2) Hardware, beispielsweise Sensoren und/oder Aktoren, oder d3) Software, beispielsweise betreffend Aspekte von Treibern, beispielsweise Hardwaretreibern und/oder Basissoftware und/oder Middleware und/oder Anwendungssoftware und/oder Dienste, oder e) Mechanik MECH, oder f) Thermomanagement THERM.

Manche Beispiele, Fig. 6, sehen vor, dass das Verfahren wenigstens eines der folgenden Elemente aufweist: Anwenden 130, beispielsweise automatisches (z.B. ohne menschliche Interaktion erfolgendes) Anwenden 130a, wenigstens eines Algorithmus ALG auf das Gesamtmodell GM, wobei der wenigstens eine Algorithmus ALG wenigstens eines der folgenden Elemente aufweist: a) Generierung von Testfällen, oder b) Durchführung von Tests, beispielsweise basierend auf, beispielsweise automatisch, generierten Testfällen, oder c) Generierung von Dokumentation, beispielsweise für wenigstens einen Aspekt des Gesamtmodells und/oder des technischen Erzeugnisses, oder d) Validierung wenigstens eines mit dem technischen Erzeugnis assoziierten Aspekts.

Der optionale Block 132 gemäß Fig. 6 symbolisiert ein optionales Verwenden des Gesamtmodells GM, beispielsweise basierend auf dem Anwenden 130, 130a.

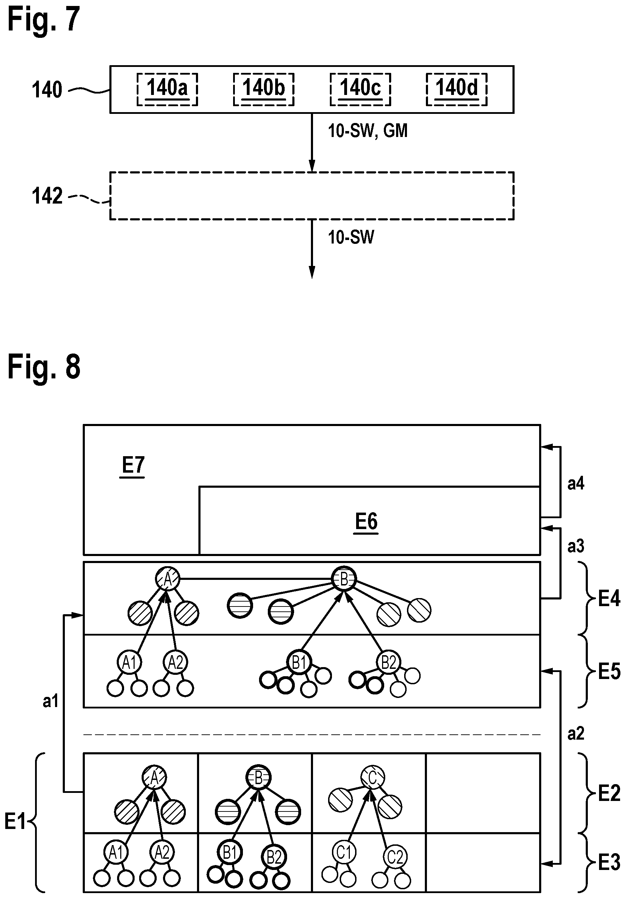

Bei manchen Beispielen, Fig. 7, ist vorgesehen, dass das Verfahren aufweist: Verarbeiten 140 einer Software 10-SW für ein bzw. das technische Erzeugnis 1, 10, beispielsweise für einen Fahrzeugcomputer für das Fahrzeug 10, wobei beispielsweise das Verarbeiten 140 wenigstens eines der folgenden Elemente aufweist: a) Entwickeln 140a der Software 10-SW, oder b) Prüfen 140b der Software 10-SW, oder c) Diagnostizieren 140c von Fehlern der Software 10-SW, oder d) Dokumentieren 140d der Software 10-SW.

Der optionale Block 142 gemäß Fig. 7 symbolisiert ein optionales Weiterentwickeln 142 der Software 10-SW gemäß manchen Beispielen, unter Verwendung des Gesamtmodells GM.

Fig. 8 zeigt schematisch weitere Beispiele und Aspekte gemäß der Offenbarung. Element E1 symbolisiert Aspekte von Modellen, beispielsweise Teilmodellen, die mit verschiedenen Teilbereichen "A" (z.B. assoziiert mit Software), "B" (z.B. assoziiert mit Hardware), "C" (z.B. assoziiert mit einem Thermomanagement) z.B. der Entwicklung E (Fig. 2) assoziiert sind. Element E2 bezeichnet hierbei die jeweiligen Teilmodelle, z.B. für Software, Hardware und Thermomanagement, und Element E3 bezeichnet ein oder mehrere Instanzen der Teilmodelle E2. Der Pfeil a1 symbolisiert eine Zusammenführung der Teilmodelle E1, wodurch beispielsweise das E4, Gesamtmodell GM gemäß der Offenbarung bereitstellbar ist (s. auch Block 100 gemäß Fig. 1), beispielsweise als gemeinsames "Meta-Modell", s. auch Element E4 von Fig. 8. Das Gesamtmodell E4 modelliert somit gemeinsam wenigstens Aspekte der Software und Hardware und des Thermomanagements, wodurch z.B. gemeinsame Abfragen über diese Bereiche und/oder Optimierungen möglich sind. Element E5 symbolisiert mit dem Gesamtmodell E4 assoziierte Instanzen A1, A2, B1, B2, die ein oder mehrere der vorstehend beschriebenen und in dem Gesamtmodell E4 vereinheitlichten Bereiche betreffen können. Beispielsweise sind die Instanzen B1, B2 jeweils mit Aspekten der Hardware und des Thermomanagements assoziiert. Element E6 symbolisiert eine Schnittstelle, z.B. entsprechend dem Element API gemäß Fig. 2, und Element E7 gemäß Fig. 8 symbolisiert ein oder mehrere Algorithmen, die auf den durch das Gesamtmodell E4, GM repräsentierten Informationen ausführbar sind. Der Doppelpfeil a2 gemäß Fig. 8 symbolisiert einen optionalen Import und/oder Export von Instanzen bzw. Teilmodellen bezüglich des Gesamtmodells E4. Der Pfeil a3 symbolisiert eine, beispielsweise automatische, Generierung der Schnittstelle E6 basierend auf dem Gesamtmodell E4. Der Pfeil a4 symbolisiert eine Erstellung bzw. Ausführung der Algorithmen E7 gemäß manchen Beispielen. Das Gesamtmodell E4 gemäß Fig. 8 symbolisiert somit Aspekte eines übergreifenden, konsistenten Modells für die Entwicklung E (Fig. 2) des technischen Erzeugnisses 1, 10, das verschiedenste mit dem technischen Erzeugnis 1, 10 assoziierte Informationen und/oder Prozesse verwalten und/oder repräsentieren und/oder nachbilden kann, wodurch bei manchen Beispielen eine gegenüber konventionellen Ansätzen mit mehreren diskreten Teilmodellen und einem vergleichsweise aufwändigen Datenaustausch z.B. unter Verwendung von Emails bzw. sonstiger manueller Interaktion und/oder Inkaufnahme von Medienbrüchen usw. flexiblere und effizientere Lösung gegeben ist.

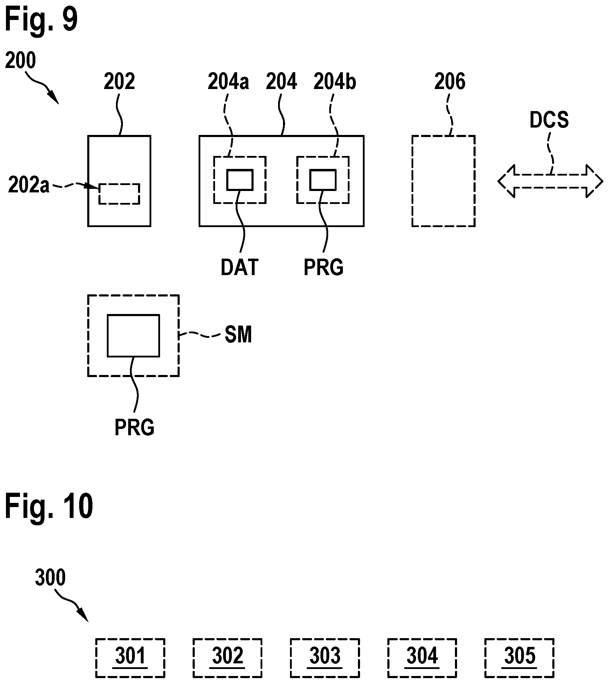

Weitere Beispiele, Fig. 9, beziehen sich auf eine Vorrichtung 200 für eine Verwaltung von Daten D-E (Fig. 2) für eine Entwicklung E eines technischen Erzeugnisses 1, 10, beispielsweise eines Fahrzeugs oder einer Komponente, beispielsweise ein Steuergerät oder Fahrzeugcomputer, für das Fahrzeug 1, wobei die Vorrichtung 200 dazu ausgebildet ist, das Verfahren gemäß der Offenbarung auszuführen.

Bei manchen Beispielen, Fig. 9, ist vorgesehen, dass die Vorrichtung 200 aufweist: eine wenigstens einen Rechenkern 202a aufweisende Recheneinrichtung ("Computer") 202, eine der Recheneinrichtung 202 zugeordnete Speichereinrichtung 204 zur zumindest zeitweisen Speicherung wenigstens eines der folgenden Elemente: a) Daten DAT (z.B. mit den Teilmodellen TM-1, TM-2, ... und/oder dem Gesamtmodell GM und/oder einer Verwendung des Gesamtmodells GM und/oder der Entwicklung E assoziierte Informationen), b) Computerprogramm PRG, beispielsweise zur Ausführung des Verfahrens gemäß der Offenbarung.

Bei weiteren Beispielen, Fig. 9, weist die Speichereinrichtung 204 einen flüchtigen Speicher (z.B. Arbeitsspeicher (RAM)) 204a auf, und/oder einen nichtflüchtigen (NVM-) Speicher (z.B. Flash-EEPROM) 204b, oder eine Kombination hieraus oder mit anderen, nicht explizit genannten Speichertypen.

Weitere Beispiele, Fig. 9, beziehen sich auf ein computerlesbares Speichermedium SM, umfassend Befehle PRG, die bei der Ausführung durch einen Computer 202 diesen veranlassen, das Verfahren gemäß der Offenbarung auszuführen.

Weitere Beispiele, Fig. 9, beziehen sich auf ein Computerprogramm PRG, umfassend Befehle, die bei der Ausführung des Programms PRG durch einen Computer 202 diesen veranlassen, das Verfahren gemäß der Offenbarung auszuführen.

Weitere Beispiele, Fig. 9, beziehen sich auf ein Datenträgersignal DCS, das das Computerprogramm PRG gemäß der Offenbarung charakterisiert und/oder überträgt. Das Datenträgersignal DCS ist beispielsweise über eine optionale Datenschnittstelle 206 der Vorrichtung 200 übertragbar (z.B. sendbar und/oder empfangbar).

Nachfolgend sind weitere Aspekte und Beispiele beschrieben, die - bei weiteren Beispielen - jeweils einzeln für sich oder in beliebiger Kombination miteinander mit wenigstens einem der vorstehend beschriebenen Aspekte und/oder Beispiele kombinierbar sind.

Bei manchen Beispielen kann das Prinzip gemäß der Offenbarung z.B. verwendet werden, um ein Verfahren zur Ablage von Entwicklungs- und Felddaten für die Entwicklung E (Fig. 2) des Erzeugnisses 1, 10, z.B. in zentralen, abfragbaren Datenstrukturen, z.B. in Form des Gesamtmodells GM, zu realisieren. Beispielsweise können Daten aus unterschiedlichen Quellen (z.B. bestehende konventionelle Teilmodelle) und/oder mit unterschiedlichem Zweck in eine gemeinsame Datenstruktur, realisiert durch das Gesamtmodell GM, übertragen und z.B. über Identifier miteinander verknüpft werden. Bei manchen Beispielen können auf den auf diese Weise erhaltenen Daten D-E z.B. Abfragen und/oder verschiedene Algorithmen ausgeführt bzw. angewendet werden.

Bei manchen Beispielen kann eine Implementierung der verknüpften, beispielsweise vernetzten Daten des Gesamtmodells GM als Graph in einer Graphdatenbank sinnvoll sein, aus der z.B. mittels Graph-Queries und - Algorithmen Informationen gewonnen werden können. Beispielsweise können für eine Standardisierung der Datenstruktur des Gesamtmodells GM Metamodelle und/oder Ontologien genutzt werden.

Das Prinzip gemäß der Offenbarung ist beispielsweise für eine Entwicklung E (Fig. 2) von technischen Erzeugnissen verwendbar, bei der viele technische Dokumente in unterschiedlichen Teilbereichen wie z.B. Hardware, Software, System, Mechanik, Safety, Security und weiteren erstellt und/oder verwaltet werden. Zudem können sich die Elemente aus diesen Teilbereichen überschneiden. Zum Beispiel ist eine zentrale Aufgabe im Bereich der Fahrzeugentwicklung die Verbindung von Software-Komponenten entsprechend ihrer Kommunikationsbedarfe und deren Verteilung auf die Rechen-Hardware entsprechend den Vorgaben einer Hardwareauslastung oder zur Erstellung eines Safety (funktionale Sicherheit)-Konzeptes. Hierfür werden bei manchen konventionellen Ansätzen unterschiedliche Systeme verwendet, und Softwarekomponenten in diesen Teilbereichen werden mitunter mehrfach mit ihren benötigten Eigenschaften modelliert, was vergleichsweise aufwendig und fehleranfällig ist. Das führt bei manchen bekannten Ansätzen dazu, dass, wenn sich z.B. Änderungen an der Softwarekomponentenstruktur ergeben, diese in mehreren Teilbereichen nachgetragen werden müssen. Dieser Prozess ist sehr zeitaufwendig und fehleranfällig. Insbesondere sind einzelne Nutzer oft auch nur in Besitz von Teilinformationen. Die Daten liegen bei manchen konventionellen Ansätzen dabei z.B. häufig unstrukturiert in Form von nicht-standardisierten Dokumentformaten vor wie z.B. Tabellen in Dateiformaten für Tabellenkalkulation, Dokumente in Textverarbeitungsformaten, Präsentationsinformationen in Dateiformaten für Präsentationen (z.B. "Folien"), Emails, ggf. mit Anhängen, in z.B. proprietären Datenformaten für Emails, etc. Teilweise sind die genannten Dokumente bei den konventionellen Ansätzen dabei z.B. nicht maschinenlesbar, oder die Dokumenten-Struktur ist von Maschinen nicht ohne menschliche Hilfestellung interpretierbar. Auch können Algorithmen z.B. zum Zwecke von Visualisierungen, Suchen, Analysen, Optimierungen und Automatisierungen bei den konventionellen Ansätzen nur in jeweiligen Teilbereichen durchgeführt werden. Ebenso sind Visualisierungen z.B. nur in jeweiligen Teilbereichen möglich. Wenn z.B. der Teilbereich verlassen wird, muss bei konventionellen Ansätzen meist auch das Werkzeug (z.B. Editor, Bearbeitungsprogramm) gewechselt werden. Dies bedingt bei den konventionellen Ansätzen notwendigerweise, dass z.B. bereichsüberschreitende Abhängigkeiten nicht visualisiert werden können. Ebenso kann bei manchen konventionellen Ansätzen nur in jeweiligen Teilbereichen gesucht werden. Es gibt bei manchen konventionellen Ansätzen z.B. keine Möglichkeit, automatisch äquivalente Elemente in anderen Bereichen zu finden, da diese meist eine andere Nomenklatur nutzen. Ferner verhindert eine Ablage in konventionellen, heterogenen Datenstrukturen eine Implementierung einer einheitlichen und effizienten Suchfunktion. Zudem sind bei manchen konventionellen Ansätzen Analysen nur auf jeweiligen Teilbereichen möglich. Inkonsistenzen zwischen den konventionellen Teilmodellen können bei den bekannten Ansätzen somit erst vergleichsweise spät in einem Entwicklungsprozess erkannt werden. Dabei gilt z.B., umso später ein Fehler erkannt wird, umso höher sind die Kosten (Aufwand, Zeit) für dessen Behebung.

Auch können bei manchen konventionellen Ansätzen in den jeweiligen Teilbereichen nur jeweils die lokal modellierten Eigenschaften optimiert werden. Dies kann zu erheblichen Effizienzverlusten führen, da bei den konventionellen Systemen die Abhängigkeiten zwischen Teilbereichen nicht explizit berücksichtigt werden können. Ferner ist es bei manchen konventionellen Ansätzen unmöglich, z.B. ein bereichsübergreifendes Designziel mit Bezug auf die einzelnen Modelle akkurat zu formulieren, sodass eine Optimierung auf Systemebene nicht oder nur unzureichend möglich ist.

Bei manchen Beispielen können Teilmodelle z.B. zur Software-Hardware-Verteilung und eine Safety-Verteilung jeweils, beispielsweise optimal, erstellt werden. Die Lösungen, die sich daraus ergeben, können dann aber z.B. im Widerspruch zueinanderstehen. Ein Zusammenführen dieser Lösungen kann bei manchen konventionellen Ansätzen z.B. zu erneuten Iterationen in einem (Entwicklungs-)Prozess führen, mit den entsprechenden Aufwänden.

Weiter werden bei konventionellen Ansätzen zur Entwicklung im Feld erhobene Daten z.B. nur im Fall eines Fehlers an die Entwickler zurückgespielt. Diese Daten sind z.B. vergleichsweise punktuell und lassen meist nur eine Behebung eines konkreten Fehlers zu. Eine Optimierung einer Funktion für das Erzeugnis, z.B. basierend auf Felddaten oder ein verbessertes Design ist bei konventionellen Ansätzen somit nicht möglich.

Auch können unter Verwendung von konventionellen Ansätzen z.B. nur Automatisierungen für die jeweiligen Teilbereiche entwickelt werden, jedoch nicht z.B. für das Gesamtsystem, z.B. ein gesamtes Erzeugnis 1, 10. In Ermangelung einer zentralen Informationsbasis können somit z.B. Entwickler aus unterschiedlichen Bereichen / Firmen / Zulieferern bei den konventionellen Ansätzen nicht gleichzeitig an demselben Modell entwickeln. Hieraus entstehen in der Praxis erhebliche zeitliche Verzögerungen.

Weitere konventionelle Ansätze verwenden beispielsweise zur Ablage der jeweiligen Teilinformation in heutigen Werkzeugen typischerweise relationale Datenbanken, die jedoch bei komplexen Abfragen (d.h. z.B. über mehrere Modellelemente hinweg) jeweils über das gesamte Modell iterieren müssen und damit sehr langsam sind oder gar keine Antwort in akzeptabler Zeit liefern. Demgegenüber kann bei manchen Beispielen das Prinzip gemäß der Offenbarung dazu verwendet werden, eine Kombination von unterschiedlichen Daten-/Informationsquellen an zentraler Stelle und in Form geeigneter Datenstrukturen mittels des Gesamtmodells GM bereitzustellen.

Bei manchen Beispielen können wenigstens manche der folgenden Aspekte realisiert werden: 1. Eine zentrale Informationsquelle zu schaffen, an der die gesamte Ökosysteminformation für die Entwicklung E des technischen Erzeugnisses 1, 10, vorhanden ist. 2. Einen Gewinn von (z.B. komplexen) Informationen zu ermöglichen, die z.B: jeweils aus konventionellen Einzelquellen nicht zugänglich sind, sondern z.B. nur durch deren Vereinigung, z.B. basierend auf einer Verwendung der mehreren Teilmodelle, die in dem Gesamtmodell GM vereinigt sind. 3. Durch Nutzung geeigneter (Graph-)Technologien die Performance heutiger Werkzeuge zu steigern und (komplexe) Abfragen zu ermöglichen, die heute z.B. aus Performance-Gründen noch nicht möglich sind. 4. Ein ganzheitliches Systemverständnis zu ermöglichen. 5. Für weitere Anwendungen eine zentrale Informationsquelle bereitzustellen.

Bei manchen Beispielen werden durch das Vernetzen der Teilbereiche bzw. Teilmodelle zu einem gesamtheitlichen Modell GM z.B. folgende bereichsübergreifende Verfahren und Algorithmen für Visualisierungen, Suchen, Analysen, Optimierungen, Automatisierungen usw. ermöglicht, was zu erheblichen Effizienzsteigerungen führen kann:
- Es können automatisch komplexe Zusammenhänge bereichsübergreifend visualisiert werden.
- Es können automatisch bereichsübergreifende Suchen durchgeführt werden.
- Es können automatisch bereichsübergreifende Analysen durchgeführt werden (e.g. Konsistenzchecks).
- Es wird eine automatische, global agierende und bereichsübergreifende Optimierung ermöglicht.

Bezugnehmend auf das obige Beispiel kann nun z.B. nicht mehr nur ein Safety-Modell oder ein Ressourcenverbrauchsmodell, jeweils gesondert für sich, optimiert werden, sondern es können unter Verwendung des Prinzips gemäß der Offenbarung z.B. vielmehr beide Modelle gleichzeitig, z.B. als Teilmodelle des Gesamtmodells GM, z.B. unter voller Berücksichtigung gegenseitiger Abhängigkeiten, optimiert werden. Dies kann bei manchen Beispielen zu einem erheblichen Effizienzgewinn führen, da z.B. keine weiteren Iterationen mehr nötig sind, um teiloptimierte Aspekte zu integrieren und insbesondere da auch ganzheitlich systemrelevante Optimierungsziele direkt verfolgt werden können. Hierbei können z.B. durch eine einheitliche Repräsentation der vollständigen Datenbasis D-E (Fig. 2) eine Vielzahl verschiedener Optimierungsansätze einzeln, aber auch insbesondere in Kombination basierend auf ihren jeweiligen Vor- und Nachteilen, eingesetzt werden. Abhängig von den Anforderungen bezüglich der Gestalt der Optimierungsziele und ihrer jeweiligen Randbedingungen, sowie des jeweiligen Einsatzzweckes, vor allem in Bezug auf verfügbare Ressourcen, notwendige Lösungsgüte und zeitliche Abhängigkeiten, sind hierbei insbesondere, aber nicht ausschließlich, Verfahren aus den Bereichen der linearen Optimierung, der Metaheuristiken, sowie dem maschinellen Lernen anwendbar. Bei manchen Beispielen können Kombinationen von klassischen Algorithmen, welche sich z.B. modellinhärente Strukturspezifika zunutze machen, mit modernen Verfahren wie z.B. bestärkendem Lernen (reinforcement learning) oder Basismodellen zur Sprachverarbeitung verwendet werden. Beispielsweise können unter Verwendung des Prinzips gemäß der Offenbarung bereichsübergreifende Automatisierungen entwickelt werden, und/oder es können, z.B. bei Änderungen an dem Erzeugnis bzw. System, z.B. automatisiert, Impact-Analysen durchgeführt werden.

Bei manchen Beispielen ermöglicht das Prinzip gemäß der Offenbarung ein Vernetzen von verschiedenen Teilbereichen bezüglich der Entwicklung E (Fig. 2), z.B. zu einem konsistenten Gesamtmodell GM, in dem z.B. für alle Parteien ENT-1, ENT-2 die aktuellen Daten zur Verfügung stehen. Beispielsweise kann dadurch ein Austausch von Informationen über ein weiteres, z.B. vergleichsweise intransparentes Medium, wie z.B. E-Mail, vermieden werden, so dass und die daraus bei manchen konventionellen Ansätzen folgenden Inkonsistenzen entfallen.

Bei manchen Beispielen ermöglicht das Prinzip gemäß der Offenbarung, automatisch Algorithmen ALG auf das konsistente Gesamtmodell GM anzuwenden. Beispielsweise kann in einem "Optimierung" eine Lösung basierend auf dem Gesamtmodell GM gefunden werden, die z.B. konsistent und direkt integriert, sowie global optimal ist. Das führt z.B. zu einem Effizienzgewinn: bessere Gesamtlösung, keine zusätzlichen Iterationszyklen. Zudem können weitere Themen bei weiteren Beispielen automatisch durchgeführt werden. Beispiele dafür sind Testfallgenerierung und Durchführung, Dokumentationsgenerierung, Validierungen...).

Bei manchen Beispielen ermöglicht das Prinzip gemäß der Offenbarung eine Nutzung von besonders geeigneten Datenstrukturen (z.B. Graphen) und Datenbanken (z.B. Graphdatenbanken), ggf. zuzüglich entsprechender Abfragesprachen (z.B. Queries) und Algorithmen (z.B. Graph-Algorithmen und - Data-Science).

Bei manchen Beispielen ermöglicht das Prinzip gemäß der Offenbarung eine Bereitstellung einer zentralen Schnittstelle API (Fig. 2), z.B. an die Systeminformation, z.B. mit sowohl vordefinierten als auch frei programmierbaren Abfragen. Diese kann bei weiteren Beispielen insbesondere als Schnittstelle für weitere Werkzeuge dienen.

Bei manchen Beispielen ermöglicht das Prinzip gemäß der Offenbarung, anhand einer vorgegebenen Modellstruktur Validierungen durchzuführen.

Bei manchen Beispielen ermöglicht das Prinzip gemäß der Offenbarung durch eine Zusammenführung von unterschiedlichen Teilmodellen in dem Gesamtmodell GM, beispielsweise in Form eines gemeinsamen Graphen GRAPH, eine ganzheitliche Sicht auf die Daten D-E. Aus dem Gesamtmodell GM kann z.B. u.a. eine Schnittstelle, z.B. vom Typ Application Programming Interface, API automatisch erstellt werden, die eine Entwicklung spezifischer Algorithmen ALG ermöglicht. Zudem bietet eine generische Datenstruktur gemäß manchen Beispielen die Möglichkeit, auf bestehende und für ihren jeweiligen Verwendungszweck optimierte Algorithmen zurückzugreifen und erspart z.B. Entwicklern des technischen Erzeugnisses 1, 10 so größere Entwicklungsaufwände für Standard-Algorithmen wie z.B. Shortest Path Algorithm und weitere.

Bei manchen Beispielen ermöglicht das Prinzip gemäß der Offenbarung folgenden Ablauf: 1. Erstellung des Gesamtmodells GM oder Integration eines oder mehrerer Teilmodelle TM', 2. Erstellung einer Schnittstelle API basierend auf dem Gesamtmodell GM, z.B. als Meta-Modell, oder basierend auf mit dem Gesamtmodell GM assoziierten Ontologien, 3. Erstellung und Anwendung generischer und/oder spezieller Algorithmen ALG, 4. Import/Export der Modell-Instanzen.

Bei manchen Beispielen können ein oder mehrere der folgenden möglichen Teilmodelle verwendet werden, beispielsweise zur Bildung und/oder zur Integration in das Gesamtmodell GM. Diese Teilmodelle können bei manchen Beispielen zusätzlich mit weiteren Aspekten wie Fehler-, Projekt-, Qualitäts-, Versionsmanagement etc. verknüpft werden. Mögliche Teilmodelle sind z.B. assoziiert mit: a) Entwicklung, z.B. Anforderungen und/oder Funktionales Design und/oder Architektonisches Design und/oder Validierung und/oder Überprüfung und/oder Felddatenerfassung, usw.

Bei weiteren Beispielen beziehen sich mögliche Teilmodelle z.B. auf einen Lebenszyklus des technischen Erzeugnisses, beispielsweise betreffend ein Konzept und/oder eine Entwicklung E (Fig. 2) und/oder eine Serienreife und/oder eine Pflege und/oder Aktualisierungen im Feld, usw.

Bei weiteren Beispielen beziehen sich mögliche Teilmodelle z.B. auf Anwendungsbereiche wie z.B. Cloud, z.B. betreffend Server-Architecture und/oder Deployment und/oder Orchestration, oder Edge, z.B. betreffend Edge-Architecture und/oder Deployment und/oder Orchestration.

Bei weiteren Beispielen beziehen sich mögliche Teilmodelle auf das Fahrzeug 10 (Fig. 2), z.B. eine Systemarchitektur und/oder Netzwerktopologien und/oder Hardware und/oder Sensoren und/oder Aktuatoren und/oder Software und/oder Treiber, z.B. Hardwaretreiber und/oder Basis-Software und/oder Middleware und/oder Anwendungssoftware und/oder Dienste.

Bei weiteren Beispielen beziehen sich mögliche Teilmodelle auf eine Mechanik, z.B. ein Design von mechanischen Komponenten, und/oder auf ein Thermomanagement.

Zudem erlaubt das Prinzip gemäß der Offenbarung, dass das Gesamtmodell GM mit neuen bis dahin unbekannten Teilmodellen TM' ergänzt werden kann.

Zur Erstellung des Gesamtmodells GM und/oder zur Integration eines Teilmodells TM' werden bei manchen Beispielen z.B. zuerst mit den Teilmodellen assoziierte Meta-Modelle oder Ontologien extrahiert und z.B. mit bestehenden Meta-Modellen verknüpft. So erhalten Elemente aus den unterschiedlichen Modellen bei manchen Beispielen eine gemeinsame semantische Bedeutung. Dazu werden z.B. die Teilmodelle beim Einlesen Schritt-für-Schritt vorverarbeitet, z.B. wie folgt: • Im ersten Schritt werden die Rohdaten abgelegt. • Im zweiten Schritt werden die Daten bereinigt (z.B. u.a. personenbezogene Daten entfernt). • Im dritten Schritt werden die Daten harmonisiert. • Im vierten Schritt werden die Daten, z.B. über bestehende Schlüssel, miteinander verbunden. Diese Schlüssel sind bei manchen Beispielen bereichsabhängig.

Beispielsweise kann aus dem Teilmodellen bzw. aus dem Gesamtmodell GM eine generische Schnittstelle API, z.B. Programmierschnittstelle, erzeugt werden.

Das übergreifende Modell GM und die Schnittstelle API erlauben es bei manchen Beispielen, allgemeine sowie spezielle Abfragen und Algorithmen ALG zu entwickeln. Nachstehend werden beispielhaft mögliche Algorithmen gemäß manchen Beispielen aufgezählt: Algorithmen für - Visualisierung komplexer Zusammenhänge, - Suchen, beispielsweise bereichsübergreifende (z.B. Teilmodelle) übergreifende Suchen, - Analysen z.B. bezüglich Abhängigkeiten wie z.B. ▪ Root cause analysis, ▪ Impact Analysen, Verifizierung und Validierung, Monitoring, Optimierung wie z.B. Kürzeste Wege (z.B. in einem Netzwerk) und/oder Software-Hardware-Verteilung und/oder Design-Entscheidungen (z.B. Pareto-Front), und/oder Algorithmen für Automatisierungen, z.B. betreffend Systemdesign und Integration und/oder Softwaredesign und Integration und/oder Codegenerierung und/oder Testfallgenerierung und/oder Dokumentationsgenerierung.

Bei manchen Beispielen können z.B. alle Instanzen von Teilmodellen aus bestehenden Datenquellen importiert, verarbeitet und exportiert werden.

Bei manchen Beispielen kann das Prinzip gemäß der Offenbarung eingesetzt werden für Entwicklungswerkzeuge für einen Automotive-Bereich, z.B. für eine Entwicklung E von Komponenten wie z.B. Fahrzeugcomputer für Fahrzeuge 1.

Weitere Beispiele, Fig. 10, beziehen sich auf eine Verwendung 300 des Verfahrens gemäß der Offenbarung und/oder der Vorrichtung 200 gemäß der Offenbarung und/oder des computerlesbaren Speichermediums SM gemäß der Offenbarung und/oder des Computerprogramms PRG gemäß der Offenbarung und/oder des Datenträgersignals DCS gemäß der Offenbarung für wenigstens eines der folgenden Elemente: a) Verknüpfen 301 von Informationen aus verschiedenen Quellen, beispielsweise Vernetzen der mehreren Teilmodelle, oder b) Ermöglichen 302 eines Ermittelns von, beispielsweise vergleichsweise komplexen, Informationen basierend auf Aspekten der mehreren Teilmodelle, oder c) Ermöglichen 303 eines, beispielsweise direkten, Informationsaustauschs zwischen den mehreren Teilmodellen, beispielsweise innerhalb des Gesamtmodells, beispielsweise innerhalb einer selben Graphenstruktur, oder d) globales Optimieren 304 über die mehreren Teilmodelle, oder e) Vermeiden 305 eines manuellen Zusammenführens von Informationen der mehreren Teilmodelle.

## Patentansprüche

1. Verfahren, beispielsweise computerimplementiertes Verfahren, für eine Verwaltung von Daten (D-E) für eine Entwicklung (E) eines technischen Erzeugnisses (1, 10), beispielsweise eines Fahrzeugs (1) oder einer Komponente (10), beispielsweise ein Steuergerät oder Fahrzeugcomputer, für das Fahrzeug (1), aufweisend: Bereitstellen (100) eines Gesamtmodells (GM), das Aspekte (ASP-TM-1, ASP-TM-2, ...) mehrerer auf jeweils unterschiedliche Aspekte des technischen Erzeugnisses (1, 10) bezogener, beispielsweise spezialisierter, Teilmodelle (TM-1, TM-2, ...) vereint, und, optional, Verwenden (102) des Gesamtmodells (GM) für die Entwicklung (E) des technischen Erzeugnisses (1, 10).

2. Verfahren nach Anspruch 1, wobei wenigstens manche Informationen des Gesamtmodells (GM) mittels wenigstens eines, beispielsweise strukturierten Graphen (GRAPH), organisiert (100a), beispielsweise dargestellt (100b), werden.

3. Verfahren nach Anspruch 1 oder 2, wobei das Verwenden (102) des Gesamtmodells (GM) wenigstens einen der folgenden Aspekte aufweist: a) Steuern (102a) wenigstens eines Aspekts der Entwicklung (E), beispielsweise wenigstens eines Entwicklungsschritts, oder b) Analysieren (102b) wenigstens eines Aspekts der Entwicklung (E), beispielsweise wenigstens eines Entwicklungsschritts, oder c) Optimieren (102c) wenigstens eines Aspekts der Entwicklung (E), beispielsweise wenigstens eines Entwicklungsschritts.

4. Verfahren nach wenigstens einem der vorstehenden Ansprüche, aufweisend: Integrieren (104) wenigstens eines weiteren Teilmodells (TM'), beispielsweise Integrieren (104a) von wenigstens einem Aspekt des wenigstens eines weiteren Teilmodells (TM'), in das Gesamtmodell (GM), beispielsweise Zusammenführen (104b) von wenigstens einem Aspekt des wenigstens eines weiteren Teilmodells (TM') mit dem Gesamtmodell (GM).

5. Verfahren nach wenigstens einem der vorstehenden Ansprüche, aufweisend: Bereitstellen (110) einer, beispielsweise zentralen, beispielsweise generischen, Schnittstelle (API), beispielsweise Programmierschnittstelle, beispielsweise Programmierschnittstelle für Anwendungen, beispielsweise Application Programming Interface, beispielsweise automatisches, z.B. ohne menschliche Interaktion, Erstellen (110a) der Schnittstelle (API) basierend wenigstens auf dem Gesamtmodell (GM), wobei beispielsweise das Bereitstellen (110) der Schnittstelle (API) ein Bereitstellen (110b) der Schnittstelle (API) basierend auf wenigstens einer mit dem Gesamtmodell (GM) assoziierten, beispielsweise durch das Gesamtmodell (GM) charakterisierten, Ontologie (GM-ONT) aufweist.

6. Verfahren nach wenigstens einem der vorstehenden Ansprüche, aufweisend: Bereitstellen (112) von Informationen, beispielsweise der Daten (D-E), für mehrere, beispielsweise alle, an der Entwicklung (E) des technischen Erzeugnisses (1, 10) beteiligte Entitäten, beispielsweise Systeme oder Computer (ENT-1) und/oder Personen, beispielsweise Teams, (ENT-2), beispielsweise Bereitstellen (112a) der Daten (D-E) mittels des Gesamtmodells (GM).

7. Verfahren nach wenigstens einem der vorstehenden Ansprüche, aufweisend wenigstens eines der folgenden Elemente: a) Importieren (120) eines Teilmodells (TM') in das Gesamtmodell (GM), beispielsweise Importieren (120a) wenigstens einer Instanz (TM'-INST) des Teilmodells (TM'), oder b) Exportieren (122) eines Teilmodells (TM') aus dem Gesamtmodell (GM), beispielsweise Exportieren (122a) wenigstens einer Instanz (TM'-INST) des Teilmodells (TM').

8. Verfahren nach wenigstens einem der vorstehenden Ansprüche, wobei wenigstens eines der Teilmodelle (TM-1, TM-2, ...) für wenigstens einen der folgenden Aspekte bezüglich des technischen Erzeugnisses (1, 10) vorgesehen ist: a) Entwicklung (DEV), wobei ein mit der Entwicklung (DEV) des technischen Erzeugnisses (1, 10) assoziiertes Teilmodell wenigstens einen der folgenden Aspekte berücksichtigt und/oder aufweist: a1) Anforderungen, oder a2) Aspekte eines funktionalen Designs, oder a3) Aspekte eines architektonischen Designs, oder a4) Validierung, oder a5) Überprüfung, oder a6) Datenerfassung, beispielsweise Felddatenerfassung, oder b) Lebenszyklus (LC), wobei ein mit dem Lebenszyklus (LC) des technischen Erzeugnisses (1, 10) assoziiertes Teilmodell wenigstens einen der folgenden Aspekte berücksichtigt und/oder aufweist: b1) Konzept, oder b2) Entwicklung, oder b3) Serienreife, oder b4) Pflege, oder b5) Aktualisierungen, beispielsweise im Feld, oder c) Anwendungsbereiche (APP), beispielsweise c1) Cloud, beispielsweise betreffend eine Serverarchitektur für die Cloud, und/oder betreffend eine Ausbringung, beispielsweise Deployment, und/oder eine Orchestrierung, oder c2) Edge, beispielsweise betreffend eine Edge-Architektur, und/oder betreffend eine Ausbringung, beispielsweise Deployment, und/oder eine Orchestrierung, oder d) Architektur (ARCH), beispielsweise Systemarchitektur, beispielsweise betreffend Aspekte von d1) Netzwerktopologie, oder d2) Hardware, beispielsweise Sensoren und/oder Aktoren, oder d3) Software, beispielsweise betreffend Aspekte von Treibern, beispielsweise Hardwaretreibern und/oder Basissoftware und/oder Middleware und/oder Anwendungssoftware und/oder Dienste, oder e) Mechanik (MECH), oder f) Thermomanagement (THERM).

9. Verfahren nach wenigstens einem der vorstehenden Ansprüche, aufweisend wenigstens eines der folgenden Elemente: Anwenden (130), beispielsweise automatisches Anwenden (130a) wenigstens eines Algorithmus (ALG) auf das Gesamtmodell (GM), wobei der wenigstens eine Algorithmus (ALG) wenigstens eines der folgenden Elemente aufweist: a) Generierung von Testfällen, oder b) Durchführung von Tests, beispielsweise basierend auf, beispielsweise automatisch, generierten Testfällen, oder c) Generierung von Dokumentation, beispielsweise für wenigstens einen Aspekt des Gesamtmodells (GM) und/oder des technischen Erzeugnisses (1, 10), oder d) Validierung wenigstens eines mit dem technischen Erzeugnis (1, 10) assoziierten Aspekts.

10. Verfahren nach wenigstens einem der vorstehenden Ansprüche, aufweisend: Verarbeiten (140) einer Software (10-SW) für ein bzw. das technische Erzeugnis, beispielsweise für einen Fahrzeugcomputer für das Fahrzeug (10), wobei beispielsweise das Verarbeiten (140) wenigstens eines der folgenden Elemente aufweist: a) Entwickeln der Software (140a), oder b) Prüfen (140b) der Software, oder c) Diagnostizieren (140c) von Fehlern der Software, oder d) Dokumentieren (140d) der Software.

11. Vorrichtung (200) für eine Verwaltung von Daten (D-E) für eine Entwicklung (E) eines technischen Erzeugnisses (1, 10), beispielsweise eines Fahrzeugs (1) oder einer Komponente (10), beispielsweise ein Steuergerät oder Fahrzeugcomputer, für das Fahrzeug (1), wobei die Vorrichtung (200) dazu ausgebildet ist, das Verfahren nach wenigstens einem der vorstehenden Ansprüche auszuführen.

12. Computerlesbares Speichermedium (SM), umfassend Befehle (PRG), die bei der Ausführung durch einen Computer (202) diesen veranlassen, das Verfahren nach wenigstens einem der Ansprüche 1 bis 10 auszuführen.

13. Computerprogramm (PRG), umfassend Befehle, die bei der Ausführung des Programms (PRG) durch einen Computer (202) diesen veranlassen, das Verfahren nach wenigstens einem der Ansprüche 1 bis 10 auszuführen.

14. Datenträgersignal (DCS), das das Computerprogramm (PRG) nach Anspruch 13 überträgt und/oder charakterisiert.

15. Verwendung (300) des Verfahrens nach wenigstens einem der Ansprüche 1 bis 10 und/oder der Vorrichtung (200) nach Anspruch 11 und/oder des computerlesbaren Speichermediums (SM) nach Anspruch 12 und/oder des Computerprogramms (PRG) nach Anspruch 13 und/oder des Datenträgersignals (DCS) nach Anspruch 14 für wenigstens eines der folgenden Elemente: a) Verknüpfen (301) von Informationen aus verschiedenen Quellen, beispielsweise Vernetzen der mehreren Teilmodelle (TM-1, TM-2, ...), oder b) Ermöglichen (302) eines Ermittelns von, beispielsweise vergleichsweise komplexen, Informationen basierend auf Aspekten der mehreren Teilmodelle (TM-1, TM-2, ...), oder c) Ermöglichen (303) eines, beispielsweise direkten, Informationsaustauschs zwischen den mehreren Teilmodellen (TM-1, TM-2, ...), beispielsweise innerhalb des Gesamtmodells (GM), beispielsweise innerhalb einer selben Graphenstruktur, oder d) globales Optimieren (304) über die mehreren Teilmodelle (TM-1, TM-2, ...), oder e) Vermeiden (305) eines manuellen Zusammenführens von Informationen der mehreren Teilmodelle (TM-1, TM-2, ...).
